(19) Europäisches Patentamt European Patent Office Office européen des brevets

(11) **EP 4 548 771 A1**

(12) **EUROPEAN PATENT APPLICATION**
published in accordance with Art. 153(4) EPC

(43) Date of publication:
07.05.2025 Bulletin 2025/19

(21) Application number: 23831387.8

(22) Date of filing: 26.06.2023

(51) International Patent Classification (IPC):
$A23J\ 3/14^{(2006.01)}$     $A23J\ 3/00^{(2006.01)}$
$A23J\ 3/16^{(2006.01)}$     $A23L\ 11/00^{(2025.01)}$
$A23L\ 13/00^{(2016.01)}$     $A23L\ 35/00^{(2016.01)}$

(52) Cooperative Patent Classification (CPC):
A23J 3/00; A23J 3/14; A23J 3/16; A23L 11/00;
A23L 13/00; A23L 35/00

(86) International application number:
PCT/JP2023/023605

(87) International publication number:
WO 2024/004947 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 JP 2022105146
15.08.2022 JP 2022129381

(71) Applicant: Amano Enzyme Inc.
Nagoya-shi
Aichi 460-8630 (JP)

(72) Inventor: SAKAI, Kiyota
Kakamigahara-shi, Gifu 509-0109 (JP)

(74) Representative: Müller-Boré & Partner
Patentanwälte PartG mbB
Friedenheimer Brücke 21
80639 München (DE)

(54) **METHOD FOR PRODUCING PROCESSED PLANT PROTEIN-CONTAINING COMPOSITION**

(57) The purpose of the present invention is to provide a method for producing a processed plant protein-containing composition, wherein the method exhibits a high decolorizing activity for plant protein-containing compositions and is able to suppress residual levels of hydrogen peroxide. The method for producing a processed plant protein-containing composition includes a step for adding hydrogen peroxide to a plant protein-containing composition and a step for adding a hydrogen peroxide-degrading enzyme. This method exhibits a high decolorizing activity for plant protein-containing compositions and can suppress the residual level of hydrogen peroxide in the processed plant protein-containing composition.

**EP 4 548 771 A1**

Processed by Luminess, 75001 PARIS (FR)

## Description

Technical Field

The present invention relates to a processing technique for decoloring a plant protein-containing composition.

Background Art

In recent years, in the food product market, the share of food products using a plant protein material as a substitute for an animal protein has increased. Plant protein-containing food products have been directed for some consumers such as vegetarian or vegan, but in recent years, demand trends also have changed, and attention has been paid again in response to an increase in awareness of health consciousness, diet, environmental problems, animal welfare, and the like.

Animal protein food products such as livestock meat and fish meat generally exhibit color tones such as red color found in livestock meat and the like, pink color found in salmon and the like, and white color found in cuttlefish and the like. Meanwhile, plant protein food products generally exhibit brown color. For this reason, examples of a problem of a recent plant substitute food product include difficulty to reproduce the color of an animal protein food product.

NPL 1 reports the decolorization of degreased camellia seed meal with hydrogen peroxide. PTL 1 describes that an enzymatic hydrolysis reaction is performed under the synergistic action of an alkaline protease and an acidic protease and/or a neutral protease, and a predetermined amount of hydrogen peroxide is added to suppress the generation of a coloring substance.

Citation List

Non Patent Literature

NPL 1: International Journal of Food Properties Volume 22, 2019 - Issue 1 1283-1295

Patent Literature

PTL 1: CN1256032(C)

Summary of Invention

Technical Problem

In view of the expanded use of the plant protein-containing composition as a food and drink product, in order to be able to more realistically reproduce the color of an animal protein food product, it is desired that residual hydrogen peroxide is removed as much as possible when decoloring is performed using hydrogen peroxide in order to ensure the usefulness as a food product in a processing method having a decolorizing activity.

Then, the purpose of the present invention is to provide a method for producing a processed plant protein-containing composition, in which the method exhibits a high decolorizing activity for plant protein-containing compositions and is able to suppress residual levels of hydrogen peroxide.

Solution to Problem

As a result of intensive studies, the present inventors have found that a high decolorizing activity can be obtained and the residual of hydrogen peroxide can also be suppressed by treating a plant protein-containing composition in the presence of hydrogen peroxide and water, and then subjecting the composition to a treatment in which a hydrogen peroxide degrading enzyme acts. The present invention has been completed by further studying based on this finding.

That is, the present invention provides the inventions of the following aspects.

Item 1. A method for producing a processed plant protein-containing composition, the method including: a decoloring step of subjecting a plant protein-containing mixed composition containing a plant protein material, hydrogen peroxide, and water to a decoloring reaction; and a hydrogen peroxide removing step of causing a hydrogen peroxide degrading enzyme to act.

Item 2. The method according to Item 1, in which a content of the hydrogen peroxide in the plant protein-containing mixed composition is 0.5 wt% or more.

Item 3. The method according to Item 1 or 2, in which the plant protein is derived from pulses.

Item 4. The method according to any one of Items 1 to 3, in which the plant protein material is untextured.

Item 5. The method according to any one of Items 1 to 3, in which the plant protein material is textured.

Item 6. The method according to any one of Items 1 to 5, in which the hydrogen peroxide degrading enzyme is catalase.

Item 7. The method according to any one of Items 1 to 6, in which the catalase is derived from the genus Aspergillus.

Item 8. A method for decoloring a plant protein-containing composition, the method including: a decoloring step of subjecting a plant protein-containing mixed composition containing a plant protein material, hydrogen peroxide, and water to a decoloring reaction; and a hydrogen peroxide removing step of causing a hydrogen peroxide degrading enzyme to act.

Item 9. A plant protein-containing food and drink product, containing a processed plant protein-containing composition obtained by the method according to any one of Items 1 to 7.

Advantageous Effects of Invention

The present invention provides a method for producing a processed plant protein-containing composition, in which the method exhibits a high decolorizing activity for plant protein-containing compositions and is able to suppress residual levels of hydrogen peroxide.

Description of Embodiments

1. Method for producing processed plant protein-containing composition

A method for producing a processed plant protein-containing composition according to the present invention, the method including: a decoloring step of subjecting a plant protein-containing mixed composition containing a plant protein material, hydrogen peroxide, and water to a decoloring reaction; and a hydrogen peroxide removing step of causing a hydrogen peroxide degrading enzyme to act. According to the method for producing a processed plant protein-containing composition according to the present invention, in the obtained plant protein-containing composition, the high decoloring effect of the plant protein-containing composition and the excellent residual inhibitory property of hydrogen peroxide are obtained. In a preferred embodiment, when a textured plant protein material is used, at least any of texture (specifically, cohesiveness and elasticity), a cooking loss inhibitory effect, and a raw material odor inhibitory effect can be further improved. When an untextured plant protein material is used, at least any of protein solubility, liquid retainability (specifically, water retainability and oil retainability), foaming property and bubble stability, and emulsifiability and emulsion stability can be further improved. Hereinafter, a method for producing a processed plant protein-containing composition according to the present invention will be described in detail.

1-1. Decoloring step

In the decoloring step, the plant protein-containing mixed composition containing a plant protein material, hydrogen peroxide, and water is subjected to the decoloring reaction.

1-1-1. Plant protein-containing mixed composition

The plant protein-containing mixed composition may contain a plant protein material, hydrogen peroxide, and water, and the preparation method thereof is not particularly limited. Examples of the method include a method of adding hydrogen peroxide water to a plant protein material in a dry state, a method of adding a plant protein material in a dry state to hydrogen peroxide water, and a method of mixing a plant protein material containing water and hydrogen peroxide.

1-1-1-1. Plant protein material

The plant protein material is not particularly limited as long as the plant protein material contains a plant protein and is in a form that can be ingested by a living body.

The plant protein is not particularly limited as long as its origin is a plant, and examples thereof include pulses such as soybean, pea, lentil, chick bean, black bean, broad bean, mung bean, lupin bean, and kidney bean; cereal crops such as wheat, barley, oat, sorghum, rice, rye, buckwheat, Japanese barnyard millet, foxtail millet, teff, quinoa, corn, and potato; nuts and seeds such as almond, coconut, peanut, cashew nut, hazelnut, pecan nut, macadamia nut, pistachio, walnut, brazil nut, pili nut, chestnut, sesame, pine nut, hemp seed (industrial hemp), chia seed, chia, amaranthus, canary seed, and linseed; and natural proteins contained in algae. In addition, since the plant protein in the present invention may be any protein derived from a plant, the plant protein may be a protein obtained by chemically partially degrading the above-mentioned natural protein with an acid, an alkali or the like, a protein obtained by enzymatically partially degrading the above natural protein with a protease or the like, a protein obtained by chemically modifying the above natural protein with various reagents, or a protein obtained by artificial peptide synthesis, in addition to the above-mentioned natural protein.

In the present invention, the above plant proteins may be used singly or in combination of two or more kinds thereof.

Among the above plant proteins, natural proteins are preferred. Alternatively, among the above plant proteins, proteins derived from pulses are preferred, soybean proteins and pea proteins are more preferred, and soybean proteins are still more preferred.

The plant protein material may further contain an optional component as other component in addition to the plant protein. Examples of the other component include water, a component derived from a plant derived from a plant protein, and a food product additive. Examples of the food product additive include a thickener, a binder, a seasoning, a pH adjusting agent, a buffering agent, a coloring agent, and a flavor.

The properties of the plant protein material may be either a textured form or an untextured form.

Textured plant protein material

The textured plant protein material (hereinafter, also described as " textured plant protein material") is a food product material commonly known as a substitute meat (pseudo meat). When the textured plant protein material is used in the present invention, in a preferred embodiment, in addition to the high decoloring effect of the plant protein-containing composition and the excellent residual inhibitory effect of hydrogen peroxide, at least one of texture (cohesiveness and elasticity), a cooking loss inhibitory effect, and a raw material odor inhibitory effect can be further improved.

Typical examples of the textured plant protein material include a material obtained by extruding a raw material mixture containing a plant protein and water with an extruder or the like, and drying or freezing the extruded raw material mixture to be textured into a meat-like material. In the present invention, the "meat" imitated by the textured plant protein material means a muscle of an animal that is edible, and when described as "meat", the "meat" is used in the sense of including not only muscles of mammals and birds but also fish and shellfish.

Examples of the shape of the textured plant protein material include a granular shape and a fibrous shape. Examples of the granular shape include a massive shape having various sizes such as a small grain type (mince), a large grain type, and a block type (the size increases in the order of the small grain type, the large grain type, and the block type); and a flat shape having various sizes such as a flake type, a fillet type, and a slice type (the size increases in the order of the flake type, the fillet type, and the slice type).

Examples of the massive shape include a shape in which the longest value among sizes in three directions is about 1 to 3.7 times, preferably about 1 to 3.6 times the shortest value when expressed in a size defined by an orthogonal triaxial system (referring to three directions of length, width, and thickness; the maximum diameter direction of the granular shape is set to coincide with at least one of the directions); and examples of the flat shape include a shape in which the longest value among the sizes in the three directions is about 4 times or more, preferably about 4.5 times or more, more preferably about 4.8 times or more the shortest value.

As a specific size of the small grain type (mince) among the massive shapes, the longest value among the three directions (that is, the maximum diameter of the granular shape) is about 8 mm or less, preferably 7.5 mm or less; as a specific size of the large grain type, the longest value is more than 8 mm and 13 mm or less, preferably more than 9 mm and 12 mm or less; and as a specific size of the block type, the longest value is more than 13 mm, preferably more than 14 mm, more than 16 mm, or more than 18 mm. As a specific size of the flake type among the flat shapes, the longest value among the three directions (that is, the maximum diameter of the flat shape) is about 15 mm or less, preferably 12 mm or less; as a specific size of the fillet type, the longest value is more than 15 mm and 40 mm or less, preferably more than 20 mm and 35 mm or less; and as a specific size of the slice type, the longest value is more than 40 mm, preferably more than 45 mm.

More specific examples of the textured plant protein material include a granular plant protein and a fibrous plant protein. The granular plant protein and the fibrous plant protein both refer to those defined in the "Japanese Agricultural Standards for Plant Proteins". The textured plant protein material used in the present invention is not limited to those defined in the "Japanese Agricultural Standards for Plant Proteins" as long as it is a material textured into a meat-like material as described above, and preferred examples thereof include those defined in the "Japanese Agricultural Standards for Plant Proteins".

Regarding the textured plant protein material that can be used in the present invention, the type of plant protein, the characteristics other than the content ratio of plant protein (e.g., properties, moisture content, grain size, product temperature, raw materials other than food product additives, food product additives, chewiness, water retainability, foreign matters, content amount), and the measurement method thereof can conform to the characteristics and the measurement method defined in the "Japanese Agricultural Standards for Plant Proteins".

The textured plant protein material may be prepared in a dry state or in a state swollen in water.

The content of the plant protein contained in the textured plant protein material is not particularly limited, and the content when the dry weight of the textured plant protein material is 100 wt% is, for example, 20 wt% or more, 25 wt% or more, or 30 wt% or more, preferably 35 wt% or more, more preferably 40 wt% or more, 45 wt% or more, or 50 wt% or more, still more preferably 60 wt% or more, yet still more preferably 70 wt% or more, and further preferably 75 wt% or more. The upper limit of the content range is not particularly limited, and is, for example, 95 wt% or less, or 90 wt% or less.

Untextured plant protein material

When the untextured plant protein material is used in the present invention, in a preferred embodiment, in addition to the high decoloring effect of the plant protein-containing composition and the excellent residual inhibitory effect of hydrogen peroxide, at least any of protein solubility, liquid retainability (water retainability and oil retainability), foaming property and bubble stability, and emulsifiability and emulsion stability can be further improved.

More specific examples of the properties of the untextured plant protein material include properties containing water as a solvent and/or a dispersion medium, such as a liquid form, a slurry form, and a paste form, as well as dry properties.

Specific examples of the untextured plant protein material include, as a liquid material, so-called plant substitute milk (also referred to as plant milk), and a powdery plant protein material obtained by extracting and/or purifying a plant protein and then drying the plant protein.

The content of the protein contained in the untextured plant protein material is not particularly limited, and the content when the dry weight of the untextured plant protein material is 100 wt% is, for example, 20 wt% or more, 25 wt% or more, or 30 wt% or more, preferably 35 wt% or more, more preferably 40 wt% or more, 45 wt% or more, or 50 wt% or more, still more preferably 60 wt% or more, yet still more preferably 70 wt% or more, and further preferably 75 wt% or more. The upper limit of the content range is not particularly limited, and is, for example, 95 wt% or less, or 90 wt% or less.

The content of the plant protein material in the plant protein-containing mixed composition is not particularly limited, and it is, for example, 0.5 to 50 wt%, preferably 1 to 35 wt%, more preferably 3 to 20 wt%, still more preferably 5 to 15 wt%, yet still more preferably 7 to 13 wt%, and further preferably 8 to 11 wt% in terms of the dry weight of the plant protein material.

1-1-1-2. Hydrogen peroxide

Hydrogen peroxide is usually used in the form of an aqueous solution (hydrogen peroxide water). The concentration of the hydrogen peroxide in the hydrogen peroxide water is not particularly limited, and is, for example, 10 to 90 wt%, preferably 20 to 45 wt%, and more preferably 30 to 40 wt%.

The content of the hydrogen peroxide in the plant protein-containing mixed composition is not limited as long as the effect of the present invention is exhibited, and it is, for example, 0.5 wt% or more, specifically 0.5 to 50 wt%, preferably 1 to 35 wt%, more preferably 3 to 20 wt%, still more preferably 5 to 15 wt%, yet still more preferably 7 to 13 wt%, and further preferably 8 to 11 wt%.

The amount of hydrogen peroxide used per plant protein material is not limited as long as the effect of the present invention is exhibited, and it is, for example, 0.1 to 10 parts by weight, preferably 0.3 to 5 parts by weight, more preferably 0.5 to 2 parts by weight, and still more preferably 0.7 to 1.5 parts by weight per 1 part by weight of the dry weight of the plant protein material.

1-1-1-3. Water

Examples of water in the plant protein-containing mixed composition include water swollen in the textured plant protein material in the case of using the textured plant protein material prepared in a state of being swollen in water; water as a solvent and/or a dispersion medium in the case of using an untextured plant protein material prepared in properties containing water as a solvent and/or a dispersion medium; water constituting hydrogen peroxide water; and water appropriately added in the preparation of the mixed composition.

The content (that is, moisture content) of water in the plant protein-containing mixed composition is not particularly limited, and is, for example, 50 to 95 wt%, preferably 60 to 90 wt%, and more preferably 70 to 85 wt%.

1-1-1-4. Other component

In addition to the plant protein material, hydrogen peroxide and water, the plant protein-containing mixed composition can contain other component as long as the progress of the decoloring reaction is not impaired. Examples of such other component include an antifoaming agent. The antifoaming agent can be used to suppress foaming due to the generation of oxygen associated with the decoloring reaction. The content of the antifoaming agent in the plant protein-containing mixed composition when the antifoaming agent is used is not particularly limited, and is, for example, 0.005 to 0.2 wt%, preferably 0.01 to 0.1 wt%, and more preferably 0.03 to 0.07 wt%.

### 1-1-1-5. pH

The pH (20°C) of the plant protein-containing mixed composition is not particularly limited, and is, for example, 3 to 10, preferably 5 to 8, more preferably 5.5 to 7.5, and still more preferably 6 to 7.

### 1-1-2. Reaction condition

The condition of the decoloring reaction to which the plant protein-containing mixed composition is provided is not limited as long as the effect of the present invention is exhibited, and is appropriately selected according to the scale of the plant protein-containing mixed composition and/or the degree of decoloring to be obtained. An optimal treatment condition can be determined through a preliminary experiment.

Regarding examples of a specific reaction condition, a reaction temperature is, for example, 5 to 120°C, 7 to 100°C, 10 to 75°C, preferably 12 to 50°C, more preferably 15 to 30°C, and still more preferably 18 to 22°C, and a reaction time is, for example, 1 to 50 hours, preferably 10 to 40 hours, and more preferably 20 to 30 hours.

### 1-2. Hydrogen peroxide removing step

In the hydrogen peroxide removing step, a hydrogen peroxide degrading enzyme is caused to act on the plant protein-containing mixed composition obtained by the above decoloring step (optionally further subjected to a washing step described later). Specifically, an enzyme mixture containing the plant protein-containing mixed composition obtained by the above decoloring step and the hydrogen peroxide degrading enzyme is prepared, and the enzyme mixture is subjected to a hydrogen peroxide degrading reaction in which the hydrogen peroxide degrading enzyme acts.

### 1-2-1. Hydrogen peroxide degrading enzyme

The hydrogen peroxide degrading enzyme used in the present invention is not particularly limited as long as it is an enzyme having a hydrogen peroxide degradation ability. Examples of the hydrogen peroxide degrading enzyme include catalase and peroxidase. These hydrogen peroxide degrading enzymes may be used singly or in combination of two or more kinds thereof. Among these hydrogen peroxide degrading enzymes, catalase is preferred.

Catalase is an enzyme (EC 1.11.1.6.) that catalyzes a reaction that produces water and oxygen. Specific examples of the catalase include catalases derived from microorganisms such as fungi and bacteria, and more specific examples include catalases derived from filamentous fungi such as the genus Aspergillus (for example, Aspergillus niger and the like) and the genus Trichoderma (for example, Trichoderma reesei and the like), and bacteria such as the genus Micrococcus (for example, Micrococcus lysodeikticus, and the like).

These catalases may be used singly or in combination of two or more kinds thereof. Among these catalases, a catalase derived from the genus Aspergillus is preferable, and a catalase derived from Aspergillus niger is more preferable from the viewpoint of further suppressing the residual of hydrogen peroxide (alternatively, in addition to the above viewpoint, from the viewpoint of improving at least any one of the texture (cohesiveness and elasticity), the cooking loss suppressing effect, and the raw material odor suppressing effect in the case of using the textured plant protein material, and from the viewpoint of further improving at least any one of the protein solubility, the liquid retainability (water retainability and oil retainability), the foaming property, the bubble stability, the emulsifiability, and the emulsion stability in the case of using the untextured plant protein material).

The amount of the catalase used is not particularly limited, and the amount per 1 g of hydrogen peroxide used in the decoloring step is, for example, 1 to 5000 U.

More specifically, when the production method of the present invention does not include the washing step described later, the amount of the catalase used in the decoloring step per 1 g of hydrogen peroxide is, for example, 25 to 2500 U or 50 to 1500 U, preferably 100 to 1000 U, more preferably 150 to 700 U, and still more preferably 200 to 500 U. When the production method of the present invention includes the washing step described later, the amount of the catalase used in the decoloring step per 1 g of hydrogen peroxide is, for example, 0.1 to 2500 U or 0,5 to 1500 U, preferably 1 to 1000 U, more preferably 1 to 100 U, and still more preferably 1 to 10 U.

Regarding the activity of the catalase, the amount of the catalase that degrades 1 $\mu$mol of hydrogen peroxide per minute is set to 1 unit (U).

1-2-2. pH

The pH (20°C) of the enzyme mixture is not particularly limited, and may be appropriately set according to the pH characteristics and the like of the hydrogen peroxide degrading enzyme, and is, for example, 2 to 11, preferably 5 to 8, more preferably 5.5 to 7.5, and still more preferably 6 to 7.

1-2-3. Reaction condition

The reaction condition in the hydrogen peroxide removing step is not limited as long as the effect of the present invention is exhibited, and are appropriately selected according to the scale of the plant protein-containing mixed composition used in the decoloring step, the amount of hydrogen peroxide, the thermal characteristics of the hydrogen peroxide degrading enzyme, and the degree of a hydrogen peroxide removing effect to be required, and the like. An optimal treatment condition can be determined through a preliminary experiment.

Regarding examples of a specific reaction condition, a reaction temperature is, for example, 5 to 70°C, preferably 10 to 50°C, more preferably 15 to 30°C, and still more preferably 18 to 22°C, and a reaction time is, for example, 10 to 120 hours, preferably 15 to 60 hours, and more preferably 20 to 40 hours.

1-3. Other steps

The production method of the present invention can include steps other than the decoloring step and the hydrogen peroxide removing step described above. Examples of the other steps include a step of preparing a plant protein material, a step of deactivating an enzyme, a cooling step, a washing step, a filtration step, and a drying step. These other steps may be performed singly or in combination of two or more steps.

The step of preparing the plant protein material is performed before the decoloring step. A specific method for preparing the plant protein material is not particularly limited, and for example, when a plant substitute milk (plant milk) is used, the plant protein material can be prepared by any method for preparing a plant substitute milk according to the type of a plant from which the plant protein is derived. When a liquid protein-containing composition (plant protein liquid) containing a plant protein material and water is used as the plant protein-containing composition, the plant protein-containing composition can be prepared by dissolving or dispersing a plant protein material in water. In the step of preparing a plant protein-containing composition, blending an optional food product additive such as a seasoning, a pH adjusting agent, a buffer, a coloring agent, or a flavor, and/or an optional treatment (for example, fermentation treatment such as lactic acid fermentation) may be further performed.

The step of deactivating an enzyme is performed after the hydrogen peroxide removing step. As a method for deactivating an enzyme, a general deactivating step may be appropriately determined according to the thermal characteristics of the hydrogen peroxide degrading enzyme used in the hydrogen peroxide removing step, and deactivation by a heat treatment is preferably used.

The washing step can be performed after the decoloring step and before the hydrogen peroxide removing step. Specifically, the plant protein-containing mixed composition obtained by the decoloring step can be washed with water. In the washing with water in the case of using an untextured plant protein material (specifically, those insoluble in water, for example, water-insoluble powders, and the like) as the plant protein material, water is added to the plant protein-containing mixed composition after the decoloring step, followed by stirring. Then, solid-liquid separation can be performed using an arbitrary method (for example, centrifugation or the like). In the water washing in the case of using a textured plant protein material as the plant protein material, the plant protein-containing mixed composition after the decoloring step can be rinsed with water or mixed with water, and then the water can be removed. The amount of water used in the water washing is not particularly limited, and is, for example, 1 to 10 times the weight of the plant protein-containing mixed composition obtained by the decoloring step. Furthermore, the number of times of washing is not particularly limited, and is, for example, 1 to 3 times. Since the production method of the present invention is excellent in an ability to suppress residual hydrogen peroxide, it is also acceptable not to perform the washing step.

1-4. Processed plant protein-containing composition

According to the production method of the present invention, a processed plant protein-containing composition processed such that a plant protein material is decolorized and residual hydrogen peroxide is suppressed is obtained.

The L* value of the processed plant protein-containing composition may be larger than the L* value of the plant protein material before the decoloring step, and is, for example, 60 or more, preferably 70 or more, more preferably 73 or more, still more preferably 75 or more, and yet still more preferably 77 or more. The a* value of the processed plant protein-containing composition may be less than the a* value of the plant protein material before the decoloring step, and is preferably 3 or less, more preferably 2 or less, still more preferably 1.5 or less, and yet still more preferably 1.2 or less. Note that the L* value and the a* value are values indicated by an L*a*b* color system that is color coordinates a* and b* and brightness L* in a three-dimensional approximate uniform color space defined by JISZ8729.

It is preferable that the processed plant protein-containing composition substantially contain no hydrogen peroxide. The phrase "substantially contain no hydrogen peroxide" means that the content of hydrogen peroxide is 5ppm or less.

In a preferred embodiment of the processed plant protein-containing composition, when the processed plant protein-containing composition is obtained by using a textured plant protein material, at least any of texture (cohesiveness and elasticity), a cooking loss inhibitory effect, and a raw material odor inhibitory effect is further improved. When the processed plant protein-containing composition is obtained by using an untextured plant protein material, at least any of protein solubility, liquid retainability (water retainability and oil retainability), foaming property and bubble stability, and emulsifiability and emulsion stability is further improved.

## 2. Plant protein-containing food and drink product

The present invention also provides a plant protein-containing food and drink product containing a processed plant protein-containing composition obtained by the above method.

The specific form of the plant protein-containing food and drink product of the present invention can be selected from any food and drink product form.

In the case of a plant protein material obtained using a textured material, the form can conform to a livestock meat, chicken meat, and/or minced fish processed food product. That is, examples of the processed plant protein-containing composition of the present invention include a meat-like processed food product (referring to a food product imitating a livestock meat, chicken meat, and/or minced fish processed food product). More preferably, examples of the processed plant protein-containing composition of the present invention include a livestock meat and/or chicken meat-like processed food product (referring to a food product imitating a livestock meat and/or chicken meat processed food product). Such a livestock meat and/or chicken meat processed food product may be any food product that is cooked by molding and heating a meat type using a livestock meat and/or chicken meat, and specific examples thereof include hamburg steak, meatball, patty, meat loaf, minced cutlet, and dim sum.

When an untextured plant protein material is used as the plant protein material, examples of the specific form of the processed plant protein-containing composition of the present invention include a plant substitute milk, a substitute yogurt, a substitute cheese, and a substitute ice cream, and preferably include a plant substitute milk and a substitute yogurt.

A plant protein-containing food and drink product according to the present invention can be obtained by subjecting a processed plant protein-containing composition obtained by the above method to an optional preparing step. In the preparing step, seasoning, form adjustment, molding, heating cooking, fermentation, freezing, and the like can be performed.

Examples in the case of a plant protein-containing composition obtained using a textured plant protein-containing composition include a method of adding a seasoning and/or an additive as necessary to the processed plant protein-containing composition after the hydrogen peroxide removing step and other steps that may be appropriately added, molding the mixture into a desired shape, and heating and cooking the mixture as necessary. Thus, a food product containing the processed plant protein-containing composition can be obtained. The method of heating cooking can be appropriately determined by those skilled in the art according to the type of the food product. Specific examples of the heating cooking method include boiling, burning (roasting, toasting, baking, grilling, broiling), steaming, and frying. These heating cooking methods may be used singly or in combination of two or more kinds thereof.

In a preferred form of the plant protein-containing food and drink product, when the plant protein-containing food and drink product is obtained by using a textured plant protein material, at least any of texture (cohesiveness and elasticity), a cooking loss inhibitory effect, and a raw material odor inhibitory effect is further improved. When the plant protein-containing food and drink product is obtained by using an untextured plant protein material, at least any of protein solubility, liquid retainability (water retainability and oil retainability), foaming property and bubble stability, and emulsifiability and emulsion stability is further improved.

Examples

Hereinafter, the present invention will be specifically described with reference to Examples, but the present invention is not limited to the following Examples.

[Components used]

(1) Plant protein material

SOIPURO (powdered soybean protein material; protein content in dry raw material: 80 to 90 wt%; hereinafter, also referred to "SPI") manufactured by J-OIL MILLS, INC.

Soybean meat (textured soybean protein material; mince, fillet, or block type; protein content in dry raw material 85 wt%; hereinafter, also referred to as "TVP") manufactured by Marukome Co., Ltd.

(2) Hydrogen peroxide

Hydrogen peroxide water (food product additive, hydrogen peroxide content 35 to 36 wt%) manufactured by FUJIFILM Wako Pure Chemical Corporation. This hydrogen peroxide water was diluted to a hydrogen peroxide concentration of 10 wt% for use.

(3) Hydrogen peroxide degrading enzyme

Catalase (derived from Aspergillus niger) manufactured by Amano Enzyme Inc.

The enzyme activity value of the catalase was measured according to the method described in Japanese Standards of Food Product Additives (9th edition). Specifically, the measurement was performed by the following method.

5 mL of a 12.4 mM hydrogen peroxide solution (pH 7.0) was weighed in a test tube, and left to stand at 30°C for 5 minutes or more. Then, 1 mL of an aqueous enzyme solution was added thereto, and the mixture was reacted by shaking well. Immediately after the reaction, the mixture was left to stand at 30°C for exactly 5 minutes. 2 mL of a 0.5 mol/L sulfuric acid solution was added thereto, followed by shaking well, and 1 mL of a 10 g/dL potassium iodide solution, 1 drop of an ammonium molybdate solution (1-100), and 5 drops of a starch solution as an indicator were added to the mixture. This solution was titrated with a 0.005 mol/L sodium thiosulfate solution (for quantification) while being stirred with a stirrer ($T_5$ (mL)). The end point of the titration was defined as a time when the blue color of the solution disappeared and then the colorless state continued for 30 seconds. As another blank, the same procedure was carried out using 1 mL of water in place of the aqueous enzyme solution ($T_0$ (mL)). Based on the following formula, the amount of the catalase degrading 1 $\mu$mol of hydrogen peroxide per minute was defined as 1 unit (1 U).

$$[\text{Expression 1}]$$

$$A = (T_0 - T_5) \times 24.18/T_0 \times 2.5 \times f$$

A: Amount of $H_2O_2$ degraded in 5 minutes ($\mu$mol)
$T_0$: Blank titration value (mL)
$T_5$: Specimen titration value (mL) 24.18: Proper blank titration value
2.5: Unit conversion coefficient (1 mL of 0.005 mol/L $Na_2S_2O_3$ = 1 mL of 2.5 $\mu$mol/L $H_2O_2$)
f: Factor of 0.005 mol/L sodium thiosulfate solution (for quantification)

$$\text{Catalase force (U/mL, U/g)} = B \times n$$

B: Catalase force (u/mL) corresponding to amount ($\mu$mol) A of $H_2O_2$ obtained by degrading 1 mL of sample solution in 5 minutes
n: Dilution multiple per 1 mL of sample

[Test Example 1]

A liquid soybean protein-containing mixed composition containing 9 wt% of SPI and 9 wt% of hydrogen peroxide in water was prepared by mixing 10 g of SPI and 100 mL of a 10 wt% aqueous hydrogen peroxide solution, and stirred under the conditions of 20°C and pH 6 to 7 for 24 hours. A swollen textured soybean protein-containing mixed composition containing 9 wt% of TVP and 9 wt% of hydrogen peroxide in water was prepared by swelling 10 g of TVP with 100 mL of a 10 wt% aqueous hydrogen peroxide solution, and stirred under the conditions of 20°C and pH 6 to 7 for 24 hours. To each hydrogen peroxide treated product, 250 U of a catalase and 0.05 wt% of a silicone emulsion antifoaming agent (XIAMETER AFE-1530 Antifoam Emulsion, manufactured by Dow Toray Co., Ltd.) were added per 1 g of hydrogen peroxide to prepare an enzyme mixture, and the mixture was stirred at 20°C for 30 minutes to obtain a processed plant protein-containing composition. Meanwhile, a processed plant protein-containing composition for comparison was obtained by performing the same treatment except that hydrogen peroxide was not used. The obtained processed plant protein-containing composition was subjected to a catalase deactivation treatment involving heating and dried to obtain a dried product of the processed plant protein-containing composition. The L*a*b* value of the obtained dried product was measured using a spectrophotometer (CM-700d: Konica Minolta Sensing Co., Ltd.), and the color tone was quantified. The L* value represents brightness, and as the L* value is larger, the dried product is closer to white, and the L* value is smaller, the dried product is closer to black. The a* value represents chromaticity, and as a* value is larger, the dried product has stronger redness. As the a* value is smaller, the dried product has stronger greenness. The b* value represents chromaticity, as the b* value is larger, the dried product has stronger yellowness, and as the b* value is smaller, the dried product has stronger blueness. The results are shown in Table 1.

[Table 1]

|  | Plant protein material | Hydrogen peroxide treatment | L* value | a* value | b* value |
|---|---|---|---|---|---|
| Comparative Example 1 | SPI | Absence | 52.4 | 5.3 | 14.4 |
| **Example 1** | | **Presence** | **78.3** | **1** | **13.9** |
| Comparative Example 2 | TVP mince | Absence | 53 | 5.1 | 14.5 |
| **Example 2** | | **Presence** | **73.3** | **1.1** | **13.6** |
| Comparative Example 3 | TVP fillet | Absence | 52.7 | 5.2 | 15 |
| **Example 3** | | **Presence** | **78** | **1.8** | **12.7** |
| Comparative Example 4 | TVP block | Absence | 54.9 | 5.4 | 15.2 |
| **Example 4** | | **Presence** | **77.4** | **0.9** | **13.9** |

As shown in Table 1, it was shown that as the brightness increased (the L* value increased), and particularly the redness decreased (particularly the a* value decreased among the a* value and the b* value) among the redness and the yellowness, the brown color of the plant protein was remarkably decolorized.

[Test Example 2]

Processed plant protein-containing composition (however, before a catalase deactivation treatment) of Examples 1 to 4 were obtained in the same manner as in Test Example 1. The hydrogen peroxide residual amount of the obtained processed plant protein-containing composition was measured by the following method.

A color developing solution of hydrogen peroxide was prepared by measuring up 1.3 mg of a horseradish-derived peroxidase (manufactured by FUJIFILM Wako Pure Chemical Corporation: 190 U/mg), 1.0 mL of 4-aminoantipyrine (manufactured by FUJIFILM Wako Pure Chemical Corporation: 0.4 g/dL), and 1.4 mL of phenol (manufactured by FUJIFILM Wako Pure Chemical Corporation: 5 g/dL) to 100 mL with a tris phosphate buffer solution (pH 7.2). The measurement limit of hydrogen peroxide by the color developing solution is 5 ppm.

As a result of the measurement, no color development of the color developing solution was observed. That is, it could be confirmed that hydrogen peroxide was substantially completely removed from the processed plant protein-containing composition obtained by the method of Test Example 1.

[Test Example 3]

The dried product of each of the processed plant protein-containing compositions of Example 2 and Comparative Example 2 prepared in Test Example 1 was swollen with water to prepare a substitute meat. 5 g of water and 0.5 g of methyl cellulose (manufactured by Shin-Etsu Chemical Co., Ltd.) were added to 25 g of the substitute meat, followed by mixing. The mixture was molded, and the molded product was then burned for 10 minutes. The burned product was allowed to stand until the temperature reached room temperature, and the color tone was quantified in the same manner as in Test Example 1 using a spectrophotometer (CM-700d: Konica Minolta Sensing Co., Ltd.). The results are shown in Table 2.

[Table 2]

| | Plant protein material | Hydrogen peroxide treatment | After burning | | |
|---|---|---|---|---|---|
| | | | L* value | a* value | b* value |
| Comparative Example 2 | TVP mince | Absence | 53.9 | 6.7 | 11.9 |
| **Example 2** | | **Presence** | **72.2** | **3** | **12.5** |

As shown in Table 2, the processed plant protein-containing composition obtained by the method of Test Example 1 maintained a decolored state even after burning.

[Test Example 4]

Processed plant protein-containing compositions (hereinafter, also referred to as "processed SPI") of Comparative Example 1 and Example 1 were obtained in the same manner as in Test Example 1. Regarding the obtained processed SPI, the degree of protein degradation, protein solubility, liquid retainability (water retainability and oil retainability), foaming property and bubble stability, and emulsifiability and emulsion stability were evaluated by the following methods.

(Degree of protein degradation)

Trichloroacetic acid was added to a solution containing 1.0 g/mL of processed SPI in water so as to be 0.2 N, followed by centrifuging at 15,000 rpm for 5 minutes. Amino nitrogen contained in a supernatant was quantified by the Kjeldahl method. The amount of nitrogen in 1.0 g of the processed SPI was also quantified by the Kjeldahl method in the same manner. The degree of protein degradation was calculated using the following formula. The results are shown in Table 3.

Degree of protein degradation = 100 × (amino nitrogen contained in supernatant)/(amount of nitrogen in 1.0 g of processed SPI)  [Expression 2]

(Protein solubility)

A solution containing 1.0 g/mL of processed SPI in water was centrifuged at 15,000 rpm for 5 minutes. The amount of nitrogen in a supernatant and the amount of nitrogen in 1.0 g of the processed SPI were quantified by the Kjeldahl method. The protein solubility was calculated using the following formula. The results are shown in Table 3.

Protein solubility = 100 × (amount of nitrogen in supernatant)/(amount of nitrogen in 1.0 g of processed SPI)  [Expression 3]

(Water retainability)

0.1 g of processed SPI was suspended in 1 g of deionized water and vortexed for 30 seconds. After standing for 30 minutes, 2,000 g of the obtained processed SPI solution was centrifuged for 10 minutes. The weight in a supernatant was measured and the weight of water absorbed by the processed SPI was calculated. Water retainability was derived as the weight of water absorbed per gram of the processed SPI. The results are shown in Table 3.

(Oil retainability)

0.1 g of processed SPI was suspended in 1 g of canola oil and vortexed for 30 seconds. After standing for 30 minutes, 2,000 g of the obtained processed SPI solution was centrifuged for 10 minutes. The weight in a supernatant was measured and the weight of oil absorbed by the processed SPI was calculated. Oil retainability was derived as the weight of oil absorbed per gram of the processed SPI. The results are shown in Table 3.

(Foaming Property)

50 mL of a solution containing 0.5 wt% of processed SPI in water was prepared, and homogenized at 18,000 rpm for 30 minutes. The solution was rapidly transferred to a 100 mL measuring cylinder, and a volume VF0 (mL) including bubbles was measured. Foaming property was calculated using the following formula. The results are shown in Table 3.

[Expression 4]

$$\text{Foaming property (\%)} = 100 \times \{(\text{VF0} - 50)/50\}$$

(Bubble stability)

50 mL of a solution containing 0.5 wt% of processed SPI in water was prepared, and homogenized at 18,000 rpm for 30 minutes. The solution was rapidly transferred to a 100 mL measuring cylinder, and a volume VF0 (mL) including bubbles was measured. After 30 minutes, a volume VF30 (mL) including bubbles was similarly weighed. The bubble stability was calculated using the following formula. The results are shown in Table 3.

[Expression 5]

$$\text{Bubble stability (\%)} = 100 \times (\text{VF30/VF0})$$

(Emulsifiability)

10 mL of canola oil and 30 mL of a solution containing 1 wt% of processed SPI in water were mixed and the mixture was homogenized at 10,000 rpm for 2 minutes. 50 $\mu$L of the mixture was collected and added to 5 mL of a 0.1 wt% SDS aqueous solution. Turbidity (A0) was measured at an absorbance of 500 nm. The emulsifiability was calculated using the following formula. The results are shown in Table 3.

[Expression 6]

$$\text{Emulsifiability (m}^2\text{/g)} = (2 \times 2.303 \times \text{A0})/(0.25 \times \text{weight of processed SPI (g))}$$

(Emulsion stability)

10 mL of canola oil and 30 mL of a solution containing 1 wt% of processed SPI in water were mixed and the mixture was homogenized at 10,000 rpm for 2 minutes. 50 $\mu$L of the mixture was immediately collected and added to 5 mL of a 0.1 wt% aqueous SDS solution. Turbidity (A0) was measured at an absorbance of 500 nm. After 10 minutes from the homogenization treatment, 50 $\mu$L of the mixture was collected in the same manner and added to 5 mL of a 0.1 wt% aqueous SDS solution. Turbidity (A10) was measured at an absorbance of 500 nm. The emulsion stability was calculated using the following formula. The results are shown in Table 3.

[Expression 7]

$$\text{Emulsion stability (\%)} = (\text{A10} \times 10)/(\text{A0} - \text{A10})$$

[Table 3]

|  | Comparative Example 1 | **Example 1** |
|---|---|---|
| Degree of protein degradation | n.d. | **n.d.** |
| Protein solubility | 23.4% | **41.3%** |
| Water retainability<br>Oil retainability | 3.0 g/g-protein<br>4.7 g/g-protein | **3.5 g/g-protein**<br>**5.7 g/g-protein** |
| Foaming property<br>Bubble stability | 23.3%<br>95.1% | **36.7%**<br>**96.6%** |
| Emulsifiability<br>Emulsion stability | 29.5 m$^2$/g<br>14.6% | **32.4 m$^2$/g**<br>**20.2%** |

As is apparent from Table 3, it could be confirmed that protein was not degraded in both the processed SPI (Comparative Example 1) and the decolored SPI processed by the method of the present invention (Example 1) (n.d.; not detected), while protein solubility, water retainability, oil retainability, foaming property, bubble stability, emulsifiability, and emulsion stability were further improved in the decolored SPI processed by the method of the present invention (Example 1).

[Test Example 5]

Processed plant protein-containing compositions (hereinafter, also referred to as "processed SPI") of Comparative Example 1 and Example 1 and processed plant protein-containing compositions (hereinafter, also referred to as "processed TVP mince") of Comparative Example 2 and Example 2 were obtained in the same manner as in Test Example 1. Using the obtained processed SPI and processed TVP mince, a textured plant protein-containing food product was prepared as follows.

The processed TVP mince was returned to water to obtain a swollen processed TVP mince, 1 g of the processed SPI of Comparative Example 1 was added to 25 g of the swollen processed TVP mince of Comparative Example 2, and 1 g of the processed SPI of Example 1 was added to 25 g of the swollen processed TVP mince of Example 2. 10 g of water and 2 g of olive oil were further mixed with the mixture of the swollen processed TVP mince and the processed SPI, and methyl cellulose was added thereto so as to have a final concentration of 2%, followed by mixing. The mixture was molded into a hamburg steak shape (thickness: 12 mm), and the molded product was baked in a frying pan for 10 minutes to obtain a textured plant protein-containing food product.

The thus prepared textured plant protein-containing food product was evaluated for texture (cohesiveness and elasticity), cooking loss, and raw material odor by the following method.

(Texture - cohesiveness and elasticity)

The cohesiveness and elasticity of a textured plant protein-containing food product were derived using the following formula using a rheometer (manufactured by Sun Scientific Co., Ltd.). The results are shown in Table 4.

Cohesiveness: Value obtained by dividing work area at second compression by area at first compression
Elasticity: Value obtained by dividing distance recorded during second compression by distance of first compression

(Cooking loss)

The weight of the textured plant protein-containing food product before and after the burning step was measured. From the weight, the cooking loss was calculated based on the following formula. The results are shown in Table 4.

Cooking loss (%) = 100 × {(weight before burning - weight after burning)/weight before burning}　　　　[Expression 8]

(Raw material odor)

Four trained organoleptic inspectors evaluated the soybean odor of the textured plant protein containing food products. The soybean odor was scored such that the score when the degree of grassy smell peculiar to soybean was the intensity of the soybean odor of the textured plant protein-containing food product obtained from the processed TVP mince of Comparative Example 2 was 5, and the score when no soybean odor was felt was 0, and the average value of the obtained scores was derived as a raw material odor score. The results are shown in Table 4.

[Table 4]

|  | Comparative Example 2 | **Example 2** |
|---|---|---|
| Cohesiveness | 0.71 | **0.83** |
| Elasticity | 0.76 | **0.85** |
| Cooking loss | 13.5% | **9.6%** |
| Raw material odor score | 5 | **0.23 ± 0.11** |

As is apparent from Table 4, it could be confirmed that the textured plant protein-containing food product obtained from the decolored TVP mince (Example 2) processed by the method of the present invention changed to texture in which cohesiveness and elasticity were further improved. Since the food product containing the textured plant protein obtained

# EP 4 548 771 A1

from the decolored TVP mince (Example 2) processed by the method of the present invention had a reduced cooking loss, it could be confirmed that the food product containing the textured plant protein was a juicy and textured plant protein-containing food product having a suppressed production cost and high liquid retainability. Furthermore, it could be confirmed that the food product containing textured plant protein obtained from the decolored TVP mince (Example 2) processed by the method of the present invention had remarkably reduced raw material odor of soybean.

**Claims**

1. A method for producing a processed plant protein-containing composition, the method comprising: a decoloring step of subjecting a plant protein-containing mixed composition containing a plant protein material, hydrogen peroxide, and water to a decoloring reaction; and a hydrogen peroxide removing step of causing a hydrogen peroxide degrading enzyme to act.

2. The method according to claim 1, wherein a content of the hydrogen peroxide in the plant protein-containing mixed composition is 0.5 wt% or more.

3. The method according to claim 1, wherein the plant protein is derived from pulses.

4. The method according to claim 1, wherein the plant protein material is untextured.

5. The method according to claim 1, wherein the plant protein material is textured.

6. The method according to claim 1, wherein the hydrogen peroxide degrading enzyme is catalase.

7. The method according to claim 1, wherein the catalase is derived from the genus Aspergillus.

8. A method for decoloring a plant protein-containing composition, the method comprising: a decoloring step of subjecting a plant protein-containing mixed composition containing a plant protein material, hydrogen peroxide, and water to a decoloring reaction; and a hydrogen peroxide removing step of causing a hydrogen peroxide degrading enzyme to act.

9. A plant protein-containing food and drink product, comprising a processed plant protein-containing composition obtained by the method according to claim 1.

14

## INTERNATIONAL SEARCH REPORT

| International application No. |
| --- |
| **PCT/JP2023/023605** |

| A. CLASSIFICATION OF SUBJECT MATTER |
| --- |
| ***A23J 3/14***(2006.01)i; ***A23J 3/00***(2006.01)i; ***A23J 3/16***(2006.01)i; ***A23L 11/00***(2021.01)i; ***A23L 13/00***(2016.01)i; ***A23L 35/00***(2016.01)i<br>FI:  A23J3/14; A23J3/16; A23J3/00 502; A23L13/00 Z; A23L11/00 D; A23L11/00 Z; A23L35/00 |
| According to International Patent Classification (IPC) or to both national classification and IPC |

| B. FIELDS SEARCHED |
| --- |
| Minimum documentation searched (classification system followed by classification symbols)<br>    A23J3/14; A23J3/00; A23J3/16; A23L11/00; A23L13/00; A23L35/00 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used)<br>    Google |

| C. DOCUMENTS CONSIDERED TO BE RELEVANT | | |
| --- | --- | --- |
| Category* | Citation of document, with indication, where appropriate, of the relevant passages | Relevant to claim No. |
| X | US 4464296 A (THE UNITED STATES OF AMERICA AS REPRESENTED BY SECRETARY OF AGRICULTURE) 07 August 1984 (1984-08-07)<br>    example 3 | 1-4, 6 |
| Y | example 3 | 7 |
| X | JP 51-114268 A (JIYON EICHI ERUNSUTAA) 07 October 1976 (1976-10-07)<br>    p. 5, example 4 | 1-2, 4, 6, 8-9 |
| Y | p. 5, example 4 | 7 |
| Y | JP 2022-033485 A (TOYO BOSEKI) 02 March 2022 (2022-03-02)<br>    paragraph [0003] | 7 |
| Y | JP 46-41570 B1 (NISSHIN SEIYU KABUSHIKI KAISHA) 08 December 1971 (1971-12-08)<br>    p. 1 | 1-3, 5-6, 8-9 |
| Y | JP 7-322811 A (AMANO PHARMACEUT CO LTD) 12 December 1995 (1995-12-12)<br>    paragraph [0046] | 1-3, 5-6, 8-9 |

☑ Further documents are listed in the continuation of Box C.       ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 August 2023** | **05 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/023605**

C. DOCUMENTS CONSIDERED TO BE RELEVANT

| Category* | Citation of document, with indication, where appropriate, of the relevant passages | Relevant to claim No. |
|---|---|---|
| Y | JP 5-308924 A (ELF ATOCHEM SA) 22 November 1993 (1993-11-22) paragraphs [0001], [0009] | 1-3, 5-6, 8-9 |
| P, X | SAKAI, Kiyota et al. Decolorization and detoxication of plant-based proteins using hydrogen peroxide and catalase. scientific reports. 27 December 2022, 12:22432 Results and discussion | 1-9 |

Form PCT/ISA/210 (second sheet) (January 2015)

## INTERNATIONAL SEARCH REPORT
### Information on patent family members

International application No.

**PCT/JP2023/023605**

| Patent document cited in search report | | | Publication date (day/month/year) | Patent family member(s) | | | Publication date (day/month/year) |
|---|---|---|---|---|---|---|---|
| US | 4464296 | A | 07 August 1984 | (Family: none) | | | |
| JP | 51-114268 | A | 07 October 1976 | (Family: none) | | | |
| JP | 2022-033485 | A | 02 March 2022 | (Family: none) | | | |
| JP | 46-41570 | B1 | 08 December 1971 | (Family: none) | | | |
| JP | 7-322811 | A | 12 December 1995 | (Family: none) | | | |
| JP | 5-308924 | A | 22 November 1993 | US | 5219601 | A | |
| | | | | columns 1, 4 | | | |
| | | | | EP | 504057 | A1 | |
| | | | | FR | 2673813 | A1 | |
| | | | | NO | 302504 | B1 | |
| | | | | CA | 2063029 | A1 | |
| | | | | TR | 26462 | A | |
| | | | | HU | 64192 | A | |
| | | | | IE | 920800 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1256032 C

**Non-patent literature cited in the description**

- *International Journal of Food Properties*, 2019, vol. 22 (1), 1283-1295